(19) Europäisches Patentamt
European Patent Office
Office européen des brevets

(11) **EP 2 853 801 A1**

(12) **EUROPEAN PATENT APPLICATION**

(43) Date of publication:
01.04.2015 Bulletin 2015/14

(51) Int Cl.:
*F17D 1/17* $^{(2006.01)}$     *C09K 8/035* $^{(2006.01)}$

(21) Application number: 13186051.2

(22) Date of filing: 26.09.2013

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: **M-I Finland Oy**
06101 Porvoo (FI)

(72) Inventors:
• **Karbasi, Amir Kiumars**
02140 Espoo (FI)
• **Andem, Mikael Taavetti Atabop**
00520 Helsinki (FI)

• **Rockas, Leif Anders Mikael**
06150 Porvoo (FI)
• **Ruutu, Kirsti Sinikka**
06100 Porvoo (FI)
• **Ericsson, Riitta Hannele**
06150 Porvoo (FI)
• **Eklund, Mirja Helena**
06650 Hamari (FI)

(74) Representative: **Berggren Oy Ab**
P.O. Box 16
Antinkatu 3 C
00101 Helsinki (FI)

(54) **Drag reducing agent composition, process for its preparation and method for reducing drag**

(57)     This disclosure relates to drag reducing agent compositions, process for their preparation, method for reducing drag of hydrocarbon flowing and uses of the composition. The composition is suitable for use in sub-sea applications.

NECADD     Performance Curve

**Fig. 1**

EP 2 853 801 A1

**Description**

**Field**

The present disclosure relates to a drag reducing agent composition, a process for the preparation of a drag reducing agent composition, and a method for reducing the drag of hydrocarbon flowing.

**Background**

Approximately 60% of the world's oil production derives from offshore operations, also in very deep waters up to at least 8000 meters. Thus the pipelines for introducing additives to oil well heads and transporting oil to gathering structures are also very long and often flexible.

When a fluid, such as a liquid hydrocarbon, is fed through a conduit, friction resulting from the fluid stream causes a pressure drop increasing with the distance from the point(s) of feeding. Such a friction loss, also called drag, increases the energy and equipment costs required for fluid transportation through the conduit.

WO 2001/088031 discloses a drag reducing agent composition and a process for its preparation. The composition comprises an alpha olefin polymer capable of reducing drag, natural fat or natural oil and optionally a dispersion stabilizing agent such as a soap like substance. Also a method of reducing drag of hydrocarbon flow is disclosed.

Typically, drag reducing agent compositions containing high concentrations of high molecular weight polymers as their active agent have high viscosities and thus require high delivery line pressure. Extended length and decreased diameter of the in-service pipeline result in still increased pressure. Subsea conditions still increase the pressure. In general, gel and suspension drag reducing agent compositions have not been used at subsea locations because economical subsea delivery would require passage through long conduits having small diameters at unstable ambient, and the probability of plugging and separation of constituents becomes too pronounced. Separation problem could be alleviated by stabilization. Stabilization using fatty acid salt and low temperature typically increase the viscosity of the composition and thereby compromise its usability.

Thus there are still problems to be solved in drag reduction, especially subsea oil production conditions.

**Summary**

A first aspect of the disclosure is a drag reducing agent composition, where the composition comprises

(a) 10 to 30 wt-% alpha olefin polymer; and
(b) 50 to 80 wt-% vegetable oil; and
(c) 0.1 to 10 wt-% stabilizing agent(s); and
(d) 1 to 10 wt-% pour point modifier,

wherein the percentages are calculated on the combined weight of constituents.

A second aspect of the present disclosure is a process for preparation of a drag reducing agent composition, where the composition comprises the steps of:

(a) providing a dispersion comprising

a. 10 to 30 wt-% alpha olefin polymer; and
b. 50 to 80 wt-% vegetable oil; and
c. 0.1 to 5 wt-% stabilizing agent; and

(b) adding 1 to 10 wt-% pour point modifier; and
(c) mixing said constituents,

wherein the percentages are calculated on the combined weight of constituent.

A third aspect of the present disclosure is a method for reducing drag of hydrocarbon flowing, where the method comprises the steps of:

(a) providing a drag reducing agent composition as described here or prepared as described here; and
(b) introducing said drag reducing agent composition into a conduit in which the hydrocarbon is or will be flowing.

A fourth aspect of the present disclosure is a drag reducing agent composition obtainable using the process as described herein.

A fifth aspect of the present disclosure is the use of the composition as described herein, or obtainable by the process as described herein for drag reduction.

## Description of the Drawings

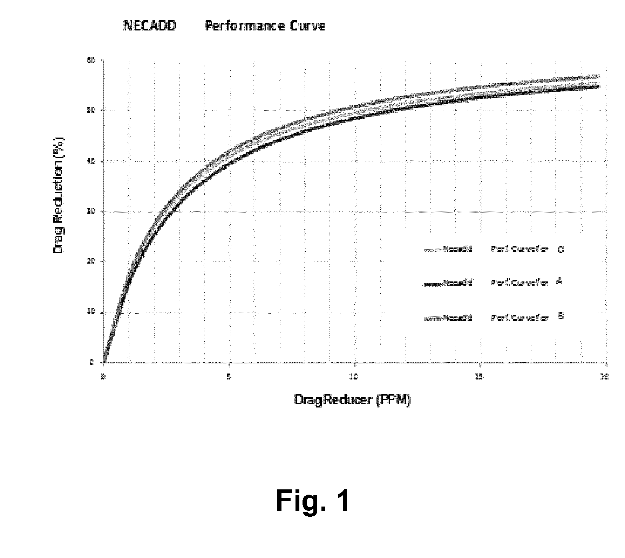

**Figure 1** is a schematic representation showing the drag reduction effect of a hydrocarbon flow as a function of added drag reduction composition.

## Definitions

Viscosities (centipoise, cP) discussed in this disclosure are measured at 4°C by use of Brookfield viscometer according to ASTM D1824, 20 rpm standard. Brookfield viscosity determines the internal fluid-friction of a fluid composition. Viscosity of commercially available pour point modifier under trade name Vis-coplex® is given as kinematic viscosity ($mm^2$/s).

Density (g/l, $g/cm^3$, $kg/m^3$) varies with temperature and pressure. In this disclosure the densities have been measured at 4°C by weighting the sample of specific volume and calculating the result by dividing the mass by volume of the sample.

Pour point of a fluid composition is the temperature at which a hydrocarbon fraction (e.g. base oil) will begin to flow. In this disclosure the pour point of the composition is measured by visually estimating whether the composition is flowing in certain temperature. The pour point of pour point and viscosity modifier (Viscoplex®) has been determined according to ASTM D97.

The phrase "Pour point modifier" used herein is used synonymously with phrases "pour point modifier and viscosity index improver" and "Pour point (Depressant/Modifier) and Cold Flow (Improver) Modifier". Pour point modifier reduces the pour point and improves the cold flow properties of a drag reducing agent composition, particularly the base oil component of the composition. Commercial pour point modifier compositions typically contain an active agent, a carrier and optionally one or more additives such as stabilizing agent(s), dispersing and wetting agents.

Alpha olefin polymers are polymers of alkenes having a double bond between carbons at position 1 and 2. Polymers can be branched or straight strain, heteropolymers or copolymers. A copolymer is a polymer which contains more than one type of repeat unit. Commercial pour point modifier compositions typically contain an active agent, a carrier and optionally one or more additives such as stabilizing agent(s), dispersing and wetting agents

In this connection the term "subsea" is meant activities such as exploration, production and development of oil and gas fields in underwater locations. Underwater oil field facilities are generally referred to using a subsea prefix, such as subsea well or subsea field.

The terms "umbilical" pipeline (or umbilical cable or umbilical line) means a pipeline with multiple conduits which typically supplies required consumables to an oil field (so called in-service pipeline). Subsea oil wells deploy umbilical pipelines to the seabed or ocean floor.

## Detailed Description

The present disclosure provides a drag reducing agent composition, which is effective and compatible with the hydrocarbon fluid to be fed through the conduit. The composition has sufficiently high concentration and easy and safe preparation and handling. The raw materials of the composition should be easily available and not harmful to the environment. Particularly the composition should be suitable for use in subsea oil production where separation, viscosity and pour point characteristics are emphasized.

Drag reducing agent compositions disclosed herein have good drag reducing properties and meet the criteria required in subsea production where the injection pipelines are long and narrow, back pressure high, and ambient temperature varies. The composition is stable in order to prevent separation of the compositions. The pour point of the composition is below 0°C and the viscosity allows introducing the composition to the hydrocarbon flow via narrow injection pipelines.

Thus, compositions of the present disclosure comprises

(a) 10 to 30 wt-% alpha olefin polymer; and
(b) 50 to 80 wt-% vegetable oil; and
(c) 0.1 to 10 wt-% stabilizing agent(s); and
(d) 1 to 10 wt-% pour point modifier,

wherein the percentages are calculated on the combined weight of constituents.

The stabilizing agent comprises fatty acid salt, particularly fatty acid salt of alkali metals or alkaline earth metals, more particularly fatty acid salt of sodium, potassium and/or calcium. Salts formed by NaOH and unsaturated fatty acid are most preferred. Stabilizing agent can comprise also other constituents such as wetting and dispersing agents, surfactants, polymeric dispersants, anti-agglomerating agents and waxes, like polyethylene/paraffin wax, in amounts up to 10 wt-% calculated on the weight of the stabilizing agent.

The alpha olefin polymers according to the present disclosure are high molecular weight (HMW, Mw > 3x10$^5$ g/mol) polymers, particularly ultra-high molecular weight (UHMW, Mw > 3x10$^6$ g/mol) non-crystalline polymers. High molecular weight improves the drag reduction properties of the polymer. The polymers are hydrocarbon soluble. They can be homopolymers or copolymers, branched or straight strain polymers, which may be dispersed in vegetable oil. Such polymers are presently commercially available e.g. under the trademarks NECADD™ grades (commercially available from M-I Finland Oy) and Tur-boFlow™ (commercially available from Flowchem).

The poly-$\alpha$-olefins of the present disclosure as such are known in the art and easily selected by a skilled person.

To reduce drag, the polymer of the drag reducing agent composition is soluble to the hydrocarbon flow to which it will be introduced. One skilled in the art is aware that the type of the polymer affects its solubility and is able to select suitable polymers. The length of the pipeline has also an impact to selection of the polymer. Examples of suitable alpha olefin polymers are $C_4$ to $C_{16}$ olefin polymers, particularly $C_5$ to $C_{12}$ olefin polymers, and more particularly $C_6$ to $C_{10}$ olefin polymers. The polymers are selected to be compatible with the hydrocarbon flow. When drag of a crude oil flow is to be reduced, $C_8$ to $C_{10}$ polymers may be used, and $C_6$ is suitable for lighter fractions, e.g. diesel flow.

$\alpha$-olefin homopolymers generally include polyhexene-1, polyoctene-1, polyde-cene-1, polyhexadecene-1 and polyeicosene-1. $\alpha$-olefin copolymers generally include hexene-1-dodecene-1 copolymer, octene-1-tetradecene-1 copolymer, etc. More particular polymers are polyhexene-1, polyoctene-1, polydecene-1, polydodecene-1, polytetradecene-1 and hexene-1-dodecene-1 copolymer, and still more particularly, polyhexene-1 and polyoctene-1.

Olefin polymers can be prepared using known methods, e.g. by polymerizing the monomers in a carrier in the presence of a Ziegler-Natta system comprising titanium chloride, an electron donor, and an alkyl aluminium cocatalyst. The polymerization can be stopped at e.g. about 10 wt-% conversion followed by changing the carrier solution to inert carrier such as vegetable oil. After complete polymerization, the polymers are cryogenic grinded and dispersed to a suitable inert carrier, such as vegetable oil.

The olefin polymer is dispersed with vegetable oil, which is environmentally friendly, user safe and easily available inert carrier for the active compound. Vegetable oil is not harmful to the hydrocarbon recovered from the oil well. Pour point of said oil is +5°C or lower; more particularly below ±0°C, and the oil is in liquid form in ambient temperature of +5°C or any higher temperature. Vegetable oil can be selected from Castor oil, Colza oil, Corn oil, Cottonseed oil, Hemp oil, Mustard oil, Palm oil, Peanut oil, Radish oil, Rapeseed oil , including Canola oil, Ramtil oil, Rice bran oil, Safflower oil, Salicornia oil, Soybean oil, Sunflower oil, Tigernut oil , Tung oil, Olive oil, Safflower oil, Sesame oil, Soybean oil, Sunflower oil, Nut oils, Citrus oils, Oils from melon and gourd seeds such as pumpkin seed oil , Flaxseed oil / linseed oil, Hemp oil. Particularly, vegetable oil may be selected from rapeseed oil, soybean oil, corn oil, sunflower and linseed oil. Vegetable oil is safe to use and have both high flash point and boiling point.

Suitable alpha olefin polymers in vegetable oil solution are commercially available. Commercial products are typically stabilized, thereby reducing the need of stabilization of the composition. The alpha olefin polymer in vegetable oil can contain up to 10 wt-% of stabilization agents comprising anti-agglomeration and dispersing agents calculated from the weight of the alpha olefin polymer containing dispersion.

The composition according to the present disclosure is soluble to the hydrocarbon flow. The composition can be defined by its pour point, viscosity and density.

At a subsea location, the ambient temperature of the injection pipeline varies considerably along the pipeline. This will set demanding requirements for the cold flow and stability properties of the fluid composition comprising the drag reducing agent. Particularly, the pour point of the composition is below -10°C, more particularly below -18°C and most particularly below -25°C. The pour below -10°C and preferably even lower overcomes the viscosity increase due to low ambient temperature and temperature variation during flow through the a long pipeline and provides flexibility to use and handle the composition in various conditions. Also subsea ambient temperature of the pipelines varies. The composition is in fluid state in order to allow introducing it to pipelines. Solidified or aggregating composition is not usable as a drag reduction agent and cannot be even introduced to injection pipelines.

The viscosity of the composition is 400 to 3000 cP defined at a temperature of 4 °C. Particularly, the viscosity is 600 to 2000 cP, more particularly 1000 to 1500 cP, and even more particularly 1200 to 1400 cP defined at a temperature of 4 °C. Optimally the viscosity is 1250 to 1350 cP defined at a temperature of 4 °C. The viscosity has tendency to increase when the composition is stabilized using fatty acid salt. Fluid properties may also be compromised when the ambient temperature is lower than the pour point of the fluid composition. Increased viscosity does not allow using the narrow pipelines without very high capacity injection pumps. According to the tests by the inventors, the product having a viscosity of about 3000 cP can still be injected via pipelines having diameter of 16 mm and length exceeding 1700 m. The high pressure, however, reduces the injection rates and capacity of the pipeline.

The density of the composition is 0.8 to 0.95 g/l, more particularly from 0.82 g/l to 0.93 g/l, even more particularly from 0.85 g/l to 0.90 g/l, defined at a temperature of 4°C. The density is compatible with vegetable oil used as a carrier.

Density and viscosity of the drag reducing agent composition are important properties in applications where the drag reducing agent composition according to the present disclosure is fed to the oil well head in sequences with a flow improver composition. The densities and viscosities are adapted to each other in order to maintain the compositions in separate phases.

The pour point modifier comprises an oil solution of an acrylic polymer. Acrylic polymer is selected from the non-restricting list of polyacrylates, polymethacrylates, polyalkylacrylate, polyalkylmethacrylate, polyacrylonitrile, polypropylene, polyethylene and polytetrahydrofuran. The concentration of the active agent in said composition is 30 to 70 wt-%, and more particularly 40 to 70 wt-%,-% calculated from the total weight of the pour point modifier composition. Suitable pour point modifiers are commercially available e.g. under trade name Vis-coplex® (Evonik/RohMax Oil Additives.). Pour point modifier can also contain additives typically used in the field of drag reduction, where the concentration is up to 3 wt-%, more particularly up to 2 wt-%, even more particularly up to 1 wt-% and most particularly up to 0.5 wt-% (calculated on the weight of the pour point modifier).

One particular composition according to the present disclosure comprises

(a) 23 to 25 wt-% alpha olefin polymer; and
(b) 62 to 67 wt-% vegetable oil; and
(c) 8 to 10 wt-% stabilizing agent/composition; and
(d) 2 to 3 wt-% pour point modifier,

wherein the percentages are calculated on the combined weight of constituents.

In addition to the above described drag reducing agent composition, aspects of the present disclosure also relates to processes for the preparation of a composition that can be used in various applications, including as a drag reducing agent. Said process comprises the steps of:

(a) providing a dispersion comprising

a. 10 to 30 wt-% alpha olefin polymer; and
b. 50 to 80 wt-% vegetable oil;
c. 0.1 to 5 wt-% stabilizing agent; and

(b) adding 1 to 10 wt-% pour point modifier; and
(c) mixing the constituents,

wherein the percentages are calculated on the combined weight of constituents.

The dispersion can be provided as a stabilized commercial product or formed by mixing said components. Stabilizing agent is selected from bases, fatty acid salts, surfactants, like modified polyethers, polymeric dispersants, like polyurethanes and polyacrylates and waxes, like polyethylene waxes, commercially available in market. A suitable stabilizing agent is a fatty acid salt formed by a reaction of a base and unsaturated fatty acid. For *in situ* stabilization, unsaturated fatty acid is added to the mixture with the base. It is also possible to add only base, wherein the base will react with the unsaturated fatty acid bonds of vegetable oil.

The physical properties of the final composition can be modified by the amount and type of pour point modifier and the stabilization. Properties of the pour point modifier have been discussed above. The final composition has the following characteristics

a. the pour point of the composition is below -10°C; and
b. the viscosity is 400 to 3000 cP; and
c. the density is 0.8 to 0.95 g/cm$^3$ defined at a temperature of 4°C.

The process allows adaptation of the final composition to different requirements caused by the nature of hydrocarbon, dimensions of the pipeline, capacity of the equipment etc.

When necessary, the process includes also further step of stabilizing the pour point modifier or the composition obtained at step (b). In addition to conveniently used stabilization agents also fine grinded alpha olefin polymer can be used.

The process starting from formation of alpha olefin polymer dispersion comprises e.g. the steps of:

(a) providing a dispersion comprising

a. 10 to 30 wt-% alpha olefin polymer; and
b. 50 to 80 wt-% vegetable oil; and
c. 0 to 0.1 wt-% stabilizing agent; and

(b) adding

a. 0.1 to 5 wt-% base of alkali or earth alkali metal, and
b. 0 to 5 wt-% unsaturated fatty acid; and

(c) mixing said constituents; and
(d) adding 1 to 10 wt-% pour point modifier under mixing
wherein

a. the pour point of the composition is below -10°C; and
b. the viscosity is 400 to 3000 cP; and
c. density is 0.8 to 0.95 g/cm$^3$ defined at a temperature of 4°C, and

wherein the percentages are calculated on the combined weight of constituents.

Stabilization *in situ* is preferred. Suitable bases and fatty acids have been discussed above.
A process using commercial compositions comprises for example the steps of:

(a) providing a dispersion comprising

a. 10 to 30 wt-% alpha olefin polymer; and
b. 50 to 80 wt-% vegetable oil; and
c. 0.1 to 10 wt-% stabilizing agent; and

(b) adding 1 to 10 wt-% pour point modifier; and
(c) mixing said compositions; and
(d) optionally analyzing the properties of the composition; and
(e) optionally adding stabilizing agent(s) or pour point modifier or both to step (c),

wherein the percentages are calculated on the combined weight of constituents.
In said processes the active ingredient, alpha olefin polymer, is provided with an inert carrier, vegetable oil. The mixture is then stabilized by a fatty acid salt of an alkali or alkaline earth metal. Should the alpha olefin polymer in oil be a commercial stabilized composition; further stabilization is not always needed. Fatty acid salt can be added to the reaction and mixed. The unsaturated fatty acid is reacted with a base *in situ,* thus forming a mixture of the fat or fatty oil and the stabilising agent. Conveniently ready-made stabilized alpha olefin dispersion is used but it is also possible to e.g. form the dispersion by mechanically grinding.
Examples of suitable unsaturated fatty acids are myristoleic acid, palmitoleic acid, sapienic acid, oleic acid, elaidic acid, vaccenic acid, linoleic acid, linoelaidic acid, alpha-linoleic acid, arachidonic acid and so on.
Examples of fats in accordance with the present disclosure are lauric acidmyristic acid fats like coconut fat, palmitic acid fats like palm fat and stearic acid fats like cocoa butter. However, the fats only melt at temperatures between 24 and 47°C, so, for dispersion, injection and distribution into the hydrocarbon fluid, they have to be heated. Therefore, the fatty oils are preferred to the fats. Typical fatty oils are the palmitic acid oils, such as palm oil; the oleic acidlinoleic acid oils, such as olive oil, the linolenic acid oils such as linseed oil, perilla oil and hemp oil, and the eruca acid oils such as rapeseed oil and mustard oil. Particular oils are those based on or containing essential amounts of lauric acid, palmitic acid, stearic acid, oleic acid, linoleic acid and/or myristic acid. Such oils are caybean oil, sun flower oil, lineseed oil, perilla oil, hemp oil, rapeseed oil and mustard oil, and most particularly lineseed oil and rapeseed oil. Additional illustrative oils, such as tall oil based on fatty acids, and resin acids such as abietic acid.
A fatty acid is added to the reaction mixture, but stabilizing effect will also be achieved by reaction between base and unsaturated fatty acid bonds/part in vegetable oil. Reaction is, however, much slower. Most particularly, fatty acids may include alkali metal and earth alkali metal salts of fatty acids having from 12 to 22 carbon atoms. An example of very useful stabilizing agent is sodium stearate. The pour point of the pour point modifier added to the reaction is below -10 °C, particularly below -20°C, and still more particularly below -30°C.
The viscosity of the particular pour point modifier added to the reaction is 54 to 1600 mm$^2$/s (kinematic viscosity, 100 C, ASTM D445).

The density of the particular pour point modifier added to the reaction is 0.85 to 0.99 g/l defined at 4 °C.

To improve the usability and prevent tendency of clogging, the drag reducing agent composition should not include any large particles. Thus, it is ground and sieved in order to remove particles exceeding 900 $\mu$m, particularly particles exceeding 600 $\mu$m, and most particularly particles exceeding 400 $\mu$m.

In addition to the drag reducing agent composition and its preparation, aspects of the present disclosure also include a method for reducing the drag of hydrocarbon flow, where the method is characterized by the steps of:

(a) providing a drag reducing agent composition as described here or prepared as described here; and
(b) introducing said drag reducing agent composition into a conduit in which the hydrocarbon is or will be flowing.

The composition may be introduced via a subsea umbilical pipeline. As used herein, the term "umbilical pipeline" means an umbilical pipeline comprising the conduit(s) configured to deliver fluid compositions, especially those fluid compositions discussed in the present disclosure to the well manifold, residing typically at the ocean floor and being in contact the riser line. The length of the injection pipeline depends on the location of the facility; the delivery system of the present disclosure is used when a long pipeline is necessary, thus providing the most benefits. The length of said service-in pipeline is from 1 to 20000 m, more particularly from 1000 to 10000 m, and most particularly 1500 to 3000 m. Especially at subsea applications in addition to lengthy lines the individual conduits tend to be fairly narrow to allow flexibility.

Depending on the conditions and location the delivery system of the composition of present disclosure is applied at ambient temperatures from -35 to 60°C, more particularly from 1 to 30°C, and most particularly from 3 to 25°C.

The need of drag reduction depends on the dimensions (such as length, diameter and distance between pumping installations) of the pipeline, pressure in inside the pipeline, desired flow rate and capacity and the properties of the hydrocarbon flow. Said flow can comprise crude oil or e.g. lighter fractions. Density and viscosity may vary. In addition the fluid is often a multi-phase flow containing fractions of oil, gas and water. Three phase flow behavior is very complicated to control, especially when large temperature reductions occur along the segment. These reductions result in strong viscosity changes, and therefore rapidly decreasing Reynolds numbers. The impact of the gas volume (both dissolved and free gas) contained in this pipeline production system can have a large impact on pressure displacement as the dissolved gas component is destabilized by pressure reduction along the line segment and expands to create a greater gas to liquids volume ratio. The implications that can be expected are at least turbulence, velocity, and shearing to increase. This will impact the performance of the DRA due to shear stresses and function along this pipeline. Phase separation and plug flow patterns will also likely change along this pipeline's length.

Naturally, the need for a drag reducing agent is dependent on the desired improvement in flow rate and capacity of crude oil in the riser pipeline. Thus the drug reducing composition according to this disclosure is applied in an amount of about 1 to 2000 ppm, more particularly 10 to 500 ppm, and most particularly 20 to 300 ppm depending on the desired flow target and/or pressure drop and the nature of the crude oil from the oil well. The crude oil flowing in the riser pipeline may comprise gas and water in addition to crude oil, forming thus a single phase, two phase or multiple phase fluid flow depending on the oil well. The drag reducing agent composition as described here is fed in sequences to form a plug flow with another composition being immiscible to composition being capable of improving the flow by reducing back pressure. In such application it is essential that the compositions can be found as pure separate phases in the conduit even some extent mixing of the two phases at the boundary or interfacial regions may occur.

The densities of these two different fluid compositions should be quite close to each other. The difference in densities of the fluid compositions is sufficiently small to avoid separation due to gravitational force during the transportation of the fluid compositions via the service-in pipeline. Especially, in view of the pipeline length, i.e. residence time of the fluids therein, and its position, i.e. if mainly vertical, gravity has a pronounced effect on the interfacial mixing. The density difference between the two fluid compositions is for example but not necessarily less than 0.1 g/cm$^3$ units, more particularly less than 0.07 g/cm$^3$ units, most particularly less than 0.05 g/cm$^3$ units, wherein the densities are defined at a temperature of 4°C. The densities can be e.g. as follows: the density of the drag reducing agent composition is from 0.80 g/cm$^3$ to 0.95 g/cm$^3$ and the density of the other fluid composition is from 0.85 g/cm$^3$ to 0.99 g/cm$^3$ defined at 4°C.

The viscosity difference between the two fluid compositions is at least 100 cP to reduce the interfacial mixing, more particularly more than 150 cP, most particularly more than 200 cP, wherein said viscosities are defined at a temperature of 4°C. For example the viscosity of the other composition can be from 100 to 1000 cP, such as from 200 to 600 cP defined at a temperature of 4°C. The selection of the viscosities is to be made with the provision that the viscosity difference between the two fluid compositions is more than 100 cP to reduce the interfacial mixing, particularly more than 150 cP, most particularly more than 200 cP, units wherein said viscosities are defined at a temperature of 4°C.

A drag reducing agent composition obtainable using the process according to this disclosure and the use of the composition according to this disclosure or obtainable by the process according to this disclosure for drag reduction in subsea oil production are also within the scope of this disclosure.

Measuring methods

Solids/Polymer content of dispersion is analysed with Oxford Instruments MQC NMR Analyzer. It is based on direct measurements of the nuclear magnetic response (NMR) response from polymer in oil. The polymer signal is effectively separated from that for oil because of a significant difference in magnetic resonance relaxivity of solids and liquids. The polymer concentration (%w/w) is calculated using appropriate calibration curve.

The DPT (= delta pressure vs. time) is a life span analysis. The sample to be tested is fed to a solvent circulation system maintained by a gear pump. By measuring the outlet pressure, the dissolution of the sample can be followed and thereafter the gradual disappearance of the drag reducing effect can be followed as the sample one time after another passes the pump. In DPT measurements, attention is especially paid to the percent DPT, which is obtained as an integral by summing up the differences between the reference pressure and the momentary pressures during the measurement. The drag reduction can be calculated using the following equation:

$$\% \text{ drag reduction} = (p_0 - p_S)/p_0 \times 100$$

wherein $p_0$ is the measured pressure drop occurring when the test fluid without drag reducing agent was pumped through the test line, and $p_S$ is the measured pressure drop occurring when the test fluid containing the drag reducing agent was pumped through the test line.

Embodiments of the present disclosure may be illustrated by the following nonlimiting examples. It should be understood, however, that the embodiments given in the description above and in the examples are for illustrative purposes only, and that various changes and modifications are possible within the scope of the present disclosure.

**Examples**

**Example 1. Properties of the drag reducing agent composition**

The drag reducing agent composition was prepared by mixing the following constituents:

**Table 1.** Recipes of the compositions

|  | DRA REF. | DRA. 3 | DRA. 4 | DRA 6 |
|---|---|---|---|---|
| Vegetable oil |  | 6.2 | 11.3 | 13.9 |
| Pour point modifier |  | 1.6 | 2.9 | 2.3 |
| Stabilizer |  | 0.2 | 0.2 | 0.1 |
| Alpha olefin Dispersion | 100.0 | 92.0 | 85.6 | 83.7 |
| Total |  | 100 | 100 | 100 |

In the tables "DRA" indicates a drag reducing agent composition.
Vegetable oil was rapeseed oil (Mildola Oy).
Pour point modifier was Viscoplex® 10-171 (Evonik/RohMax Oil Additives)
Stabilizer was concentrated liquid NaOH (app. 50 %, Algol Chemicals Oy)
Alpha olefin dispersion was NECADD™ 271 (M-I Finland Oy / M-I Swaco, A Schlumberger Company)
The polymer content of the final compositions, DPT-%'s, viscosities, densities and were measured by methods described above. Fluidity was evaluated visually. The results are shown in Table 2 below.

**Table 2.** Properties of the compositions

| ANALYSIS | DRA REF. | RES. 3 DRA | RES. 4 DRA | RES.6 DRA |
|---|---|---|---|---|
| Solid/Polymer content, (%) | 27.9 | 24.5 | 22.7 | 24.1 |
| DPT % | 31.8 | 29.3 | 27.3 | 28.0 |
| Viscosity 20 rpm @ 4 °C (cP) | 2080 | 1600 | 1460 | 1310 |
| Density @ 4 °C (kg/m³) | 920 |  |  | 920 |
| Fluidity @ -25 °C (visual) | Frozen |  |  | Stiff but flowing |

The drag reducing composition shown as "RES. 6 DRA" was taken to further tests shown as Examples 2 and 3.

**Example 2. DRA injection in single phase hydrocarbon feed**

The drag reducing agent composition described above was tested for drag reduction in three different hydrocarbon fluids shown in Table 5. The base line data and characteristics of the pipeline are shown in **Table 3.**

**Table 3.** Base Line data; characteristics of the pipeline and feed without drag reducing agent composition

| Base Line Data (No DRA) | Start point | End Point |
|---|---|---|
| Fluids flow rate (kl/h) | 450 | -- |
| Discharge Pressure (kg/cm$^2$) | 78.47 | -- |
| Ending Pressure (kg/cm$^2$) | -- | 4.69 |
| Length Segment (km) | 440 | -- |
| ID (m) | 0.39 | -- |
| Line fill (kl) | 53573 | -- |

**Table 4.** Physical properties of the transported refined petroleum products A, B and C.

| Base Line Data (No DRA) | Viscosity @ 40C (cst) | Density @15C (gr/cc) |
|---|---|---|
| A | 3.1 | 0.822 |
| B | 0.8 | 0.74 |
| C | 1.15 | 0.787 |

DRA was the injected to the hydrocarbon flow in various amounts and flow rate was measured and compared to the base line data. Table 3 below shows the injection rate (liters per hour) and concentration in the hydrocarbon flow (ppm) of the drag reducing agent composition of the present disclosure. Flow increase and drag reduction are calculated by comparing the base line flow rate and the flow rate after injection of drag reducing agent composition. The increase and drag reduction are given is percentages compared to the base line.

**Table 5.** Flow rate and calculated increase and drag reduction resulting from drag reducing agent composition injection to the refined products. In the table "NECADD™" indicates the composition described here.

| Batching Schedule | Drag Reduction (%) | Flow rate (kl/h) | Flow Increase (%) | NECADD ™ (PPM) | NECADD ™ (l/h) |
|---|---|---|---|---|---|
| A | 20 | 497 | 10.4 | 1.40 | 0.70 |
| A | 40 | 559 | 24.2 | 5.21 | 2.91 |
| B | 20 | 527 | 17.1 | 1.22 | 0.64 |
| B | 40 | 583 | 29.5 | 4.43 | 2.58 |
| C | 20 | 492 | 9.3 | 1.26 | 0.62 |
| C | 40 | 554 | 23.1 | 4.70 | 2.60 |

Drag reduction as a function of drag reducing agent composition concentration is show in **Figure 1.**

**Example 3 Multi-Phase system, DRA injection in three phase flow**

Effect of DRA as described above was tested for drag reduction is a multi-phase flow (hydrocarbon fluid; gas; water). The characteristics of the pipeline and the base line data is shown in Table 4.

**Table 4.** Base Line data

| Base Line Data (No DRA) | Starting point | End point |
|---|---|---|
| Oil flow rate (BOPD) | 5000 | -- |
| Water Cut (%) | 6.0 | -- |
| Gas flow rate (mmscfd) | 45.0 | -- |
| Discharge Pressure (bar) | 65.0 | -- |
| MAOP (Bar) | 88.0 | -- |
| Ending Pressure (Bar) | -- | 38.0 - 40.0 |
| | | |
| Length Segment (km) | 37.0 | -- |
| ID (m) | 0.25 | -- |
| Crude oil Viscosity @ 30°C (Cp) | 0.7281 | -- |
| Density @ 15.56°C (g/ml) | 0.6997 | -- |
| Line fill (Bls) | 11 793 | -- |

**Table 5.** Flow rate and calculated increase and drag reduction resulting from drag reducing agent composition injection. In the table "NECADD™" indicates the composition described here.

| NECADD™ (DRA PPM's) | %DR | Resulting Pressure decrease (%) |
|---|---|---|
| 250 | 36.86 | 15.3 |
| 130 | 35.8 | 14.8 |
| 65 | 33.78 | 14.0 |

Three phase flow behavior is very complicated to analyze, especially when large temperature reductions occur along the segment. These reductions result in strong viscosity changes, and therefore rapidly decreasing Reynolds numbers. The impact of the gas volume (both dissolved and free gas) contained in this pipeline production system could have a large impact on pressure displacement as the dissolved gas component is destabilized by pressure reduction along the line segment and expands to create a greater gas to liquids volume ratio.

The implications expect here were turbulence, velocity, and shearing to increase. This will impact the performance of the DRA due to shear stresses and function along this pipeline. Phase separation and slug flow patterns will also likely change along this pipeline's length.

**Claims**

1. A composition comprising

   (e) 10 to 30 wt-% alpha olefin polymer; and
   (f) 50 to 80 wt-% vegetable oil; and
   (g) 0.1 to 10 wt-% stabilizing agent(s); and
   (h) 1 to 10 wt-% pour point modifier,
   wherein the percentages are calculated on the combined weight of constituents.

2. The composition according to claim 1, wherein the stabilizing agent comprises fatty acid salt.

3. The composition according to claim 1 or 2, wherein the alpha olefin polymer is $C_4$ to $C_{16}$ olefin polymer.

4. The composition according to any of claims 1 to 3, wherein the polymer has molecular weight of at least $3x10^6$ g/mol.

5. The composition according to any of the preceding claims, wherein vegetable oil is selected from rapeseed oil, soybean oil, corn oil, sunflower and linseed oil.

6. The composition according to any of the preceding claims, wherein the pour point of the composition is below -10°C.

7. The composition according to any of the preceding claims, wherein the viscosity of the composition is 400 to 3000 cP.

8. The composition according to any of the preceding claims, wherein the density of the composition is 0.8 to 0.95 g/cm$^3$ defined at a temperature of 4°C.

9. The composition according to any of the preceding claims, wherein the pour point modifier comprises acrylic polymer.

10. The composition according to any of the preceding claims comprising

   (e) 24 to 25 wt-% alpha olefin polymer; and
   (f) 62 to 66 wt-% vegetable oil; and
   (g) 8 to 10 wt-% stabilizing agent/composition; and
   (h) 2 to 3 wt-% pour point modifier,

wherein the percentages are calculated on the combined weight of constituents.

11. A process for the preparation of a composition comprising the steps of:

   (a) providing a dispersion comprising

      a. 10 to 30 wt-% alpha olefin polymer; and
      b. 50 to 80 wt-% vegetable oil; and
      c. 0.1 to 5 wt-% stabilizing agent; and

   (b) adding 1 to 10 wt-% pour point modifier; and
   (c) mixing the constituents,

wherein the percentages are calculated on the combined weight of constituents.

12. The process according to claim 11, wherein said stabilising agent is prepared *in situ* by reacting said unsaturated fatty acid with a base of an alkali metal or alkaline earth metal.

13. A method comprising the steps of:

   (a) providing a drag reducing agent composition according to any of claims 1 to 10 prepared according to any of claims 11 or 12,
   (b) introducing said drag reducing agent composition into a conduit in which the hydrocarbon is or will be flowing.

14. A method according to claim 13, wherein the composition is introduced via a subsea umbilical pipeline.

15. A drag reducing agent composition obtainable using the process according to claim 11 or 12.

16. Use of the composition according to claims 1 to 10 or obtainable by the process of claims 11 to 12 for drag reduction in subsea oil production.

Fig. 1

<table>
<tr><td colspan="2" rowspan="2">Europäisches<br>Patentamt<br>European<br>Patent Office<br>Office européen<br>des brevets</td><td>**EUROPEAN SEARCH REPORT**</td><td>Application Number<br>EP 13 18 6051</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/143830 A1 (COOPER IND INC [US]; RAPP KEVIN J [US]; GAUGER GARY A [US]; MCSHANE CH) 27 November 2008 (2008-11-27) | 1-12,15 | INV.<br>F17D1/17<br>C09K8/035 |
| Y | * paragraphs [0020], [0031], [0032], [0025] - [0038], [0041], [0042]; claim 10 *<br>* the whole document * | 13,14,16 | |
| X | US 2003/186824 A1 (CHIU I-CHING [US] ET AL) 2 October 2003 (2003-10-02) | 1-12,15 | |
| Y | * paragraphs [0041] - [0044], [0083] - [0086] *<br>* the whole document * | 13,14,16 | |
| X | US 2007/004837 A1 (LIU BING [CN] ET AL) 4 January 2007 (2007-01-04) | 1-12,15 | |
| Y | * claims 1, 3, 8, 10 *<br>* the whole document * | 13,14,16 | |
| A | EP 0 735 130 A1 (ETHYL CORP [US]) 2 October 1996 (1996-10-02)<br>* claims 1,2 *<br>* the whole document * | 1-16 | TECHNICAL FIELDS SEARCHED (IPC)<br><br>C09K<br>F17D |
| Y | US 4 881 566 A (UBELS SIBRAND A [BE] ET AL) 21 November 1989 (1989-11-21)<br>* column 2, lines 14-31; claim 8 *<br>* the whole document * | 13,14,16 | |
| Y | US 2009/227729 A1 (BURDEN TIMOTHY L [US] ET AL) 10 September 2009 (2009-09-10)<br>* paragraphs [0039], [0040], [0043], [0044]; figure 1 *<br>* the whole document * | 13,14,16 | |

| The present search report has been drawn up for all claims | | |
|---|---|---|
| Place of search | Date of completion of the search | Examiner |
| The Hague | 29 April 2014 | Straub, Thomas |

Europäisches
Patentamt

European
Patent Office

Office européen
des brevets

**Application Number**

EP 13 18 6051

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

Application Number

EP 13 18 6051

The Search Division considers that the present European patent application does not comply with the requirements of unity of invention and relates to several inventions or groups of inventions, namely:

1. claims: 1-10(completely); 16(partially)

   A composition comprising (e) 10 to 30 wt-% alpha olefin polymer; and (f) 50 to 80 wt-% vegetable oil; and (g) 0.1 to 10 wt-% stabilizing agent(s); and (h) 1 to 10 wt-% pour point modifier, wherein the percentages are calculated on the combined weight of constituents.
   Use of the composition according to claims 1 to 10 or obtainable by the process of claims 11 to 12 for drag reduction in subsea oil production.
   ---

2. claims: 11-15(completely); 16(partially)

   A process for the preparation of a composition comprising the steps of: (a) providing a dispersion comprising a. 10 to 30 wt-% alpha olefin polymer; and b. 50 to 80 wt-% vegetable oil; and c. 0.1 to 5 wt-% stabilizing agent; and (b) adding 1 to 10 wt-% pour point modifier; and (c) mixing the constituents, wherein the percentages are calculated on the combined weight of constituents.
   A method comprising the steps of: (a) providing a drag reducing agent composition according to any of claims 1 to 10 prepared according to any of claims 11 or 12, (b) introducing said drag reducing agent composition into a conduit in which the hydrocarbon is or will be flowing.
   A drag reducing agent composition obtainable using the process according to claim 11 or 12.
   Use of the composition according to claims 1 to 10 or obtainable by the process of claims 11 to 12 for drag reduction in subsea oil production.
   ---

## ANNEX TO THE EUROPEAN SEARCH REPORT
## ON EUROPEAN PATENT APPLICATION NO.

EP 13 18 6051

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2014

| Patent document cited in search report | | Publication date | Patent family member(s) | | | Publication date |
|---|---|---|---|---|---|---|
| WO 2008143830 | A1 | 27-11-2008 | CA | 2683310 | A1 | 27-11-2008 |
| | | | CA | 2786816 | A1 | 27-11-2008 |
| | | | CN | 101688149 | A | 31-03-2010 |
| | | | KR | 20100022473 | A | 02-03-2010 |
| | | | WO | 2008143830 | A1 | 27-11-2008 |
| US 2003186824 | A1 | 02-10-2003 | AR | 036616 | A1 | 22-09-2004 |
| | | | AT | 317889 | T | 15-03-2006 |
| | | | BR | 0212786 | A | 05-10-2004 |
| | | | CA | 2461158 | A1 | 03-04-2003 |
| | | | CN | 1568360 | A | 19-01-2005 |
| | | | DE | 60209260 | T2 | 23-11-2006 |
| | | | DK | 1436369 | T3 | 19-06-2006 |
| | | | EP | 1436369 | A1 | 14-07-2004 |
| | | | ES | 2258172 | T3 | 16-08-2006 |
| | | | JP | 2005504141 | A | 10-02-2005 |
| | | | KR | 20040039416 | A | 10-05-2004 |
| | | | MY | 128504 | A | 28-02-2007 |
| | | | TW | I258503 | B | 21-07-2006 |
| | | | US | 2003186824 | A1 | 02-10-2003 |
| | | | WO | 03027212 | A1 | 03-04-2003 |
| | | | ZA | 200402221 | A | 15-04-2005 |
| US 2007004837 | A1 | 04-01-2007 | CN | 1891736 | A | 10-01-2007 |
| | | | GB | 2427869 | A | 10-01-2007 |
| | | | US | 2007004837 | A1 | 04-01-2007 |
| EP 0735130 | A1 | 02-10-1996 | CA | 2171923 | A1 | 25-09-1996 |
| | | | DE | 69626058 | D1 | 13-03-2003 |
| | | | DE | 69626058 | T2 | 16-10-2003 |
| | | | EP | 0735130 | A1 | 02-10-1996 |
| | | | US | 5658864 | A | 19-08-1997 |
| US 4881566 | A | 21-11-1989 | AU | 610010 | B2 | 09-05-1991 |
| | | | AU | 3943789 | A | 26-04-1990 |
| | | | BR | 8904527 | A | 24-04-1990 |
| | | | CA | 1309653 | C | 03-11-1992 |
| | | | DK | 501889 | A | 12-04-1990 |
| | | | EP | 0364218 | A2 | 18-04-1990 |
| | | | MX | 165842 | B | 07-12-1992 |
| | | | NO | 894053 | A | 17-04-1990 |
| | | | US | 4881566 | A | 21-11-1989 |
| US 2009227729 | A1 | 10-09-2009 | US | 7598333 | B1 | 06-10-2009 |
| | | | US | 2009227729 | A1 | 10-09-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2001088031 A